# EUROPEAN PATENT APPLICATION

(11) **EP 1 182 574 A2**
(43) Date of publication of application: **27.02.2002**
(21) Application number: 01109413.3
(22) Date of filing: 20.04.2001
(51) Int. Cl.: G06F 13/42

(54) **Computer system absent a parallel system bus**

(30) Priority: 17.08.2000 US 641443
(71) Applicant: Xybernaut Corporation, Fairfax, Virginia 22033 (US)
(72) Inventor: Sallam, Hussein, Clarksville, MD 21029 (US)
(74) Representative: Borchert, Uwe Rudolf, Dipl.-Ing.

(57) **Abstract**

The invention is essentially a novel computer architecture which is absent the traditional parallel system bus. The computer makes use of a serial bus controller (SBC) and serial communication lines to facilitate communication between attached system components and any peripheral devices. The components themselves can be in their own enclosures, designed to and will contain BIOS-type information sufficient to characterize themselves and convey any necessary protocol for communicating with themselves. At each system boot different system components such as CPU(s), memory modules, fixed disks, etc. can be added or removed and even while in the powered on state various peripheral devices can be added and removed. This architecture permits infinite combinations of system configurations limited only by the number of available connections to the serial bus controller. Individual components are interconnected via high speed serial data transmission and thus are not subject to the distance limitations imposed by the inherent properties of the parallel system bus.

## Description

### Invention

This invention relates to a computer system without a parallel Bus and, more particularly, a system utilizing a serial Bus controller. This application is a continuation- in-part of parent U.S. application serial no. 09/294,668 filed in the U.S. Patent and Trademark Office April 19, 1999.

### Background of The Invention

New advances in serial communication are pushing the speed of the new standard serial interfaces such as IEEE 1394 close to and soon beyond the traditional parallel PCI BUS speed. The design constraints imposed on the structure of computer systems by the limitations of the traditional BUS must be removed and new system designs must emerge to keep pace.

In parent application 09/294,668, advances in modular designs and assembly of computer components are disclosed to somewhat assist in meeting new computer system's needs. These redesigns of computer architecture are needed because advances in engineering and manufacturing techniques have significantly improved the performance of computers while the underlying design has remained relatively static. All modem computers are based on the Von Neumann architecture. The Von Neumann model consists of five major system components: (1) input unit, (2) output unit, (3) arithmetic logic unit (ALU), (4) memory and (5) control unit. The system Bus or parallel Bus architecture is a refinement of the Von Neumann model consisting of a central processing unit (CPU) comprised of ALU and control, memory, and an input/output unit. The communication among the components is handled by a shared parallel pathway called the system Bus which is made up of the data Bus, address Bus and control Bus. There is also a power Bus and some architectures may even have a separate I/O Bus. In this design, the parallel Bus serves as a means of electrical interconnection for the system level components such as memory, microprocessor, hard drive(s) and I/O. It is called a Bus because it travels to all the destinations in the computer. The Bus is comprised of a series of parallel conductors (wires) which interconnect the components. The Bus width or number of parallel conductors, determines the speed of data transmission. Wider Buses permit more bits of simultaneous data throughput. Most modern personal computers use 32-bit Buses both internally and externally. Not all the lines carry data however. A certain number, such as 8 or 16, may carry data and the remainder carry control and address signals at the same time. Until recently, this has been the most efficient and expeditious means of passing instructions back and forth amongst components. In theory, a parallel Bus architecture assumes that the electrical signals will travel at the exact same speed. However, because electrons, thus electrical signals, don't travel at the exact same speed in all conductors there is a phenomenon known as signal skew. In each clock cycle of the Bus clock, the data on the Bus is latched or captured creating a 32 bit word, or instruction. Thus, it is imperative that all data be present at the same time so that it can be latched and passed on to the appropriate logical element if bit errors are to be avoided. Signal skew imposes finite limits on the length of the Bus because of this synchronization problem. Because of the nature of the Bus, there are significant physical limitations on the position and relative distance that components such as memory, the CPU, and hard disk can be away from each other. These limitations are inherent in the parallel Bus architecture. The only remedy is to slow down the speed of the Bus commensurate with the desired length, thus ultimately degrading performance. An additional limitation imposed by the parallel Bus design includes dissipation of heat generated by the CPU. Because all system level components must be in close physical proximity to one another, and generally in the same enclosure, the CPU's heat can cause degradation to other components. This problem is worsened in mobile or wearable computer environments where there is little space for active cooling devices and the components are placed even closer to one another relative to desktop computers.

Recently there have been attempts to extend the parallel Bus to overcome these problems. An example of this is the flex Bus design of Via Corporation, U.S. Patents 5,285,398 and 5,798,907, which attempts to extend the parallel Bus through the use of an external ribbon cable. However, this is merely an extension of the existing Bus, severely limited in its capability, and vulnerable to the same signal skew phenomena. This has forced reversions to slower CPU speeds which is generally undesirable in an industry where processor speeds more than double every 6-12 months. Additionally, the wide, external ribbon cable is not an efficient design with respect to its physical footprint which does not allow for flexibility in terms of architecture, i.e. additional processors, memory modules, peripherals, etc, and physical and environmental constraints.

### Summary of The Invention

It is therefore an object of this invention to provide a computer architecture which overcomes the above-noted limitations of the prior art as the main architecture on the computer.

It is also an object of this invention to provide a unique computer architecture.

It is an additional object of this invention to provide a computer architecture which is not subject to the physical design limitations of state-of-the art computer architectures.

It is yet another object of this invention to provide a computer architecture which is more flexible than prior art architectures.

It is still yet another object of this invention to provide a computer architecture which is characterized by the absence of the parallel system Bus as the primary system Bus.

Another object of this invention is to provide a computer architecture which makes use of a serial Bus controller in place of the parallel system Bus.

Another still further object of this invention is to provide a computer architecture which is more cheaply and easily upgraded and enhanced.

Still yet another object of this invention is to provide an architecture which is less vulnerable to failure due to internal heat exposure.

An additional object of this invention is to provide a computer architecture which incorporates the basic principles of object-oriented computer programming in its design.

Another additional object of this invention is to provide a computer architecture which outperforms prior art computer architectures with respect to speed and versatility.

These and additional objects of this invention disclosed herein are accomplished, generally, by a Bus-less or serial Bus PC architecture which utilizes a serial Bus controller (SBC) as a replacement for the traditional parallel computer Bus.

### Brief Description of The Drawings

Figure 1A illustrates in flow chart form the Von Neumann model.

Figure 1B is a flow chart illustrating the system Bus in the Von Neumann model.

Figure 2 illustrates a flow chart of the instruction pipeline in a conventional computer.

Figure 3 shows a high level diagram of a typical X86 chip.

Figure 4A illustrates the chip of Figure 3 when in communication with the main memory (RAM) along the system BUS as used in the prior art.

Figure 4B shows an exemplary embodiment of the architecture of the present invention.

Figure 5 illustrates an exemplary modification of the processor chipset in an embodiment of the present invention.

Figure 6 illustrates the star network system architecture embodiment of the present invention.

Figure 7 illustrates an alternative embodiment of the present invention.

Figure 8 illustrates an embodiment of the serial Bus architecture of the present invention.

Figure 9 illustrates an alternative embodiment of the serial Bus architecture of the present invention.

Figure 10 illustrates a wearable embodiment of the serial Bus PC of the present invention.

### Detailed Description of The Drawings

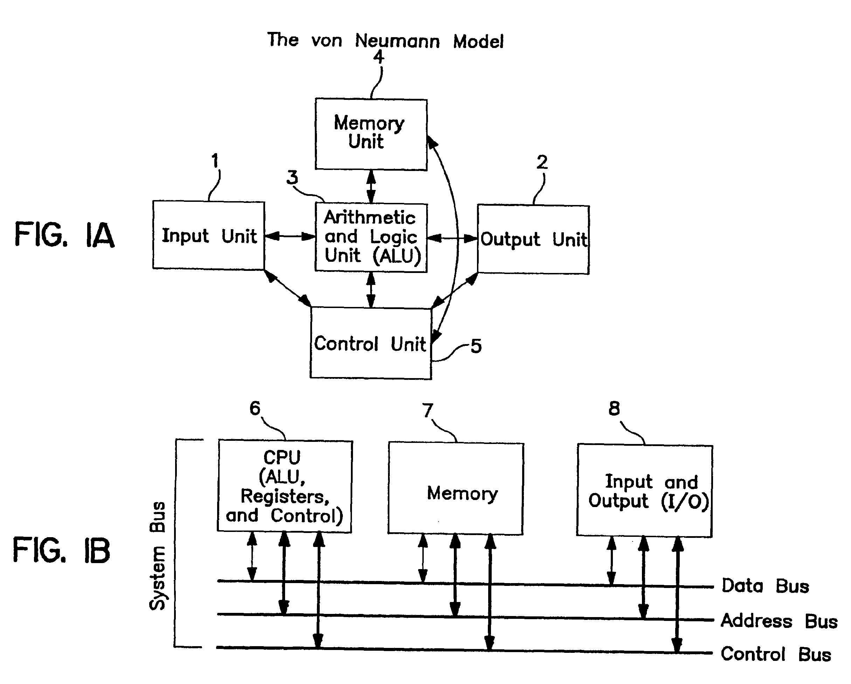

Figure 1A demonstrates the basic Von Neumann 5 component model including memory unit 4, input 1 and output 2 units, arithmetic and logic unit (ALU) 3, and control unit 5. This is the basis for modern day PC architecture. Figure 1B shows a refinement of the Von Neumann model, namely, the system Bus model. This model employs a CPU 6 (ALU combined with Control), memory 7, and an I/O unit 8. Communication between the components is handled by the system Bus which consists of the data, address and control Buses in parallel and synched to one another. So, for each clock cycle of the Bus clock, a signal on the system Bus is the bit-wise aggregate of each line on data, address and control Bus, namely ones or zeros.

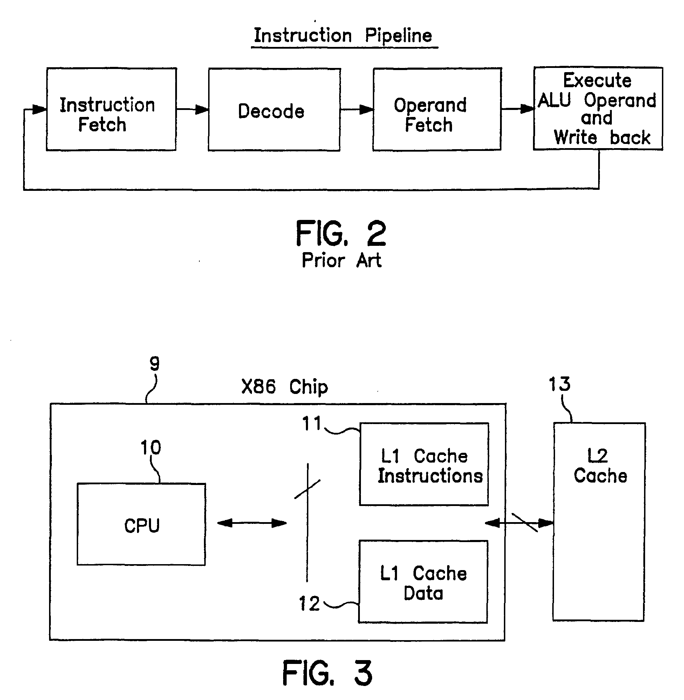

Figure 2 shows the instruction pipeline in a standard PC. An instruction is fetched off the stack, decoded, the operand is fetched and then the instruction is executed and any output is generated. The cycle continues in this manner until all pending instructions have been through execution stage.

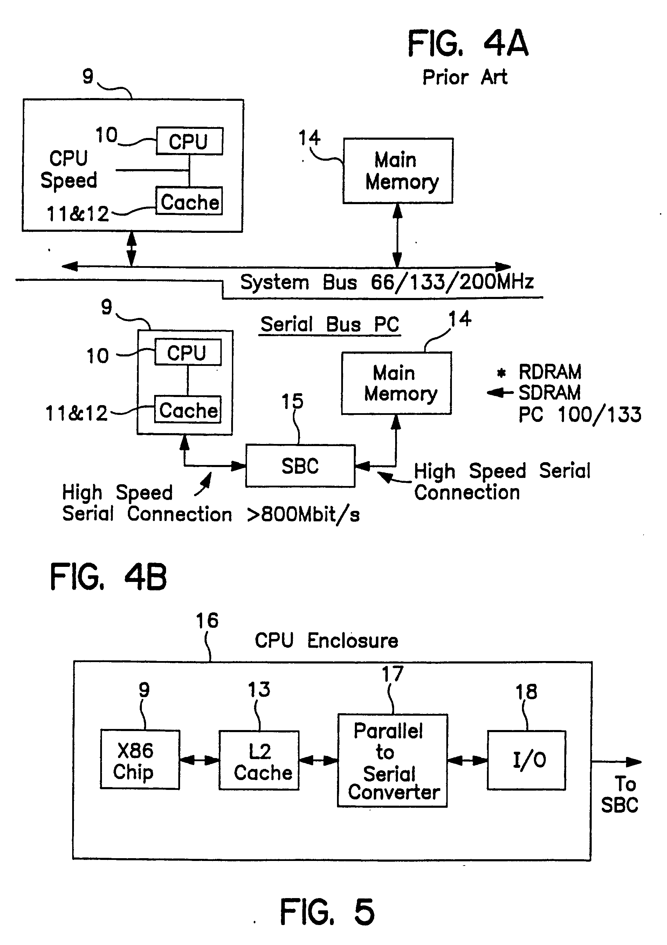

Figure 3 shows a typical modern X86 chip 9 such as those manufactured by Intel® Corporation or Advanced Micro Devices Inc. Internal to the chip 9 is the CPU 10 itself along with Level 1 cache for instructions 11 and for data 12. The level 2 cache 13 is generally off the chip, that is to say not in the same enclosure or packaging. Figure 4A shows the same chip 9 coupled with the main memory (RAM) 14 which communicates along the system Bus. State-of-the-art system Bus speeds range from 66 to 200 MHz. Figures 3 and 4A both represent prior art. In contrast, Figure 4B shows the architecture of the present invention whereby the processor chip 9 and main memory 14 communicate through the serial Bus controller (SBC) 15. This communication occurs at a speed whose upper limit is dictated by the limit of serial data transmission. Currently, this is 800 Mbps for IEEE 1394 or 2.12 and 4.25 Gbps for Fibre Channel. However, this figure is doubling approximately on an annual basis.

Figure 5 demonstrates a possible modification to the chipset of the CPU. In the processor enclosure16 is contained the processor 9 itself, the Level 2 cache 13 and at least initially a parallel to serial converter 17 which connects directly to the input/output 18 of the enclosure 16 which then runs via serial cable to the SBC 15.

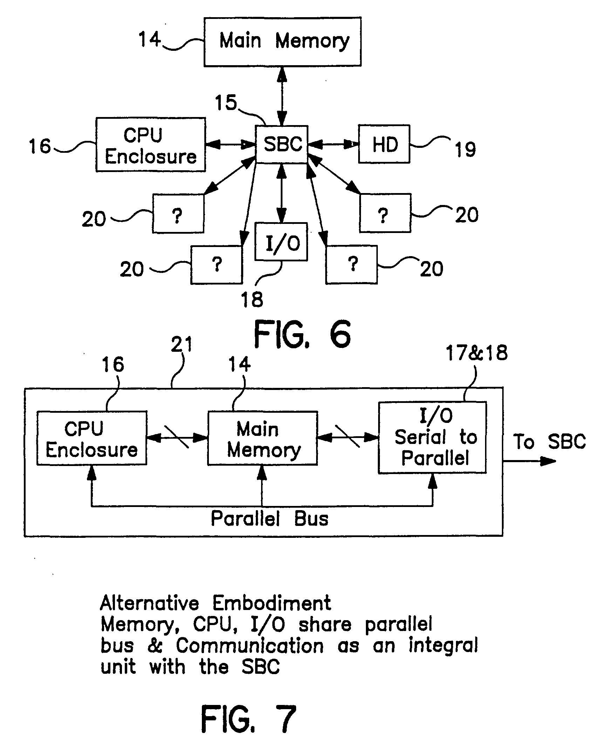

Figure 6 demonstrates a high level view of the architecture whereby all components are connected to the SBC 15 in a star network topology. There are extra connections 20 to accommodate additional components such as peripheral devices which are labeled with question marks. These peripheral devices can include, but are not limited to video modules, audio modules, floppy disk, zip disk, network card, communications card, CD ROM, additional storage devices, etc.

Figure 7 demonstrates an alternative embodiment whereby a single enclosure 21 houses the microprocessor16 (chip, level 1 and level 2 cache), the main memory (RAM)14 and the parallel to serial converter 17 and I/O 18. This allows the processor 10 to communicate with RAM 14 at a very high speed and take advantage of the parallel architecture of these components. Peripheral devices such as hard drives, CD-ROMS, floppy drives and output devices are inherently serial devices inasmuch as they read and/or write data one bit at a time. Thus, there is no initial performance loss resulting from connecting these devices to the SBC as there may be with communication between RAM 14 and the processor 10. Furthermore, this allows for full parallel communication between the processor 10 and memory 14 at the clock speed of the CPU 10, or large fraction thereof, since this data is not going through the SBC 15. However, all communication between this integrated CPU enclosure 16 and the other components will be facilitated by the SBC 15.

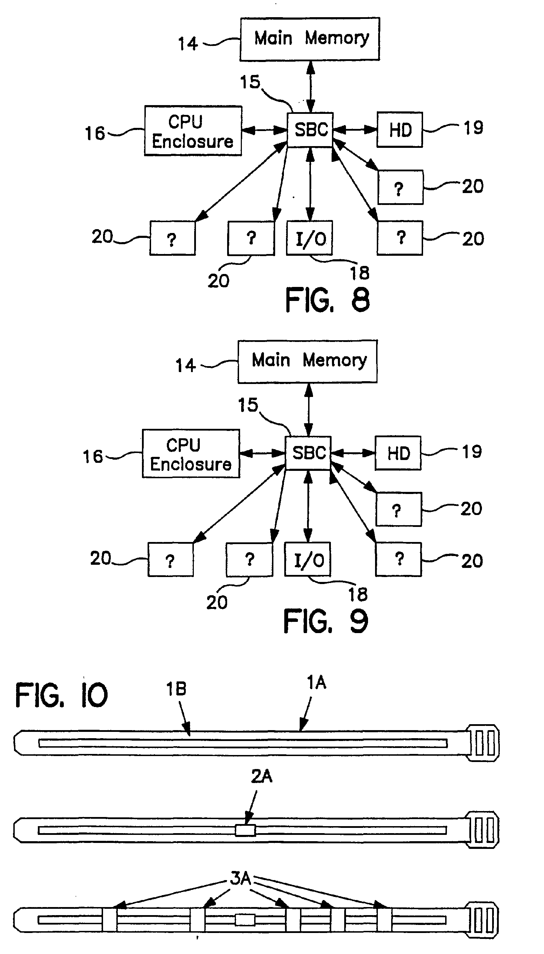

Figures 8 and 9 demonstrate two permutations of the serial Bus architecture and topologies associated therewith. In Figure 8, the SBC 15 is in a traditional star network topology where the SBC 15 serves as the center of the network with all other components connected in a spoke to hub fashion. Again peripheral components 20 are represented by question marks, as there can be a plurality of different configurations depending upon the attached peripheral devices.

Figure 9 shows the hard drive 19 being connected to the SBC but also directly connected to system memory 14. This will facilitate faster "reads from" and "writes to" the hard disk 19 by the system memory 14.

Figure 10 demonstrates a wearable embodiment of the serial Bus PC. Items 1A and 1B show a belt which contains an embedded channel allowing the cable to run throughout the length of the belt. Item 2A demonstrates the serial Bus controller or master Bus controller. This part is affixed to a belt since a connection is required for any configuration. Item 3A shows various modules attached to the belt. These could include but are not limited to CPU module, memory module, hard disk module, sound and video modules and communications module. Communication can be, but is not limited to, one of the set of wireless modem (CDMA, TDMA, FDMA, GSM), wireless LAN, proprietary military and proprietary commercial. Each module is electromagnetically shielded from the other and may be designed to incorporate additional properties which are conducive to the needs of the component contained therein. In this wearable embodiment, the user can easily and flexibly configure his or her computer to meet the needs of his or her application. For instance, he or she could choose a single CPU as opposed to two, small or large amounts of RAM, small or large hard drive modules, robust or basic video capability, and custom communications module depending upon the environment and communications needs of the user.

### Description of the Invention

This invention is related to concurrently filed application entitled "Operating System for a dynamically re-configurable PC," commonly assigned to the same entity. The disclosure of that application is hereby incorporated by reference into the present disclosure. The invention is directed towards a new architecture that enables the design of a Bus-less PC. The replacement of the parallel computer Bus with a fast serial, wired or wireless Bus, breaks the physical design limitation imposed on the individual components of a computer system in the current traditional computer design with a parallel Bus and a single enclosure. These limitations include the components having to be physically close together either under one cover or in the same enclosure or on the same back plane as well as sharing the Bus electrical signals. This new architecture opens the possibilities for different electrical, logical, physical and mechanical computer system designs that are extremely flexible and modular. The added flexibility and modularity will also enable customers and/or technicians to more easily control the upgrade of their computer systems at the component level rather than at the system level, will allow a single component to be used in multiple computer systems simply by disconnecting it from one system and connecting it to another, as well as enhance system ease of configuration (configurability), reliability, maintainability and serviceability all while protecting the customer's investment in expensive computer components and peripherals. The invention has particular advantages to the design of wearable computers but also represents a significant advance with significant market opportunities for conventional and embedded computers as well. By "conventional computer(s)" is meant throughout this disclosure as any computer known and used today and available from companies such as IBM, Dell, Sun, Gateway, Apple, Toshiba, Micron or Hewlett-Packard. Also, "conventional computer(s)" means the Von Neumann model as described herein. One skilled in the art will understand conventional to mean laptops, desktops, workstations, server computers, mini-computers, mainframes or other well known computer systems.

The disclosed invention overcomes the shortcomings of the prior art through the creation of a heretofore unknown computer architecture which obviates the need for the limiting parallel computer Bus and replaces the traditional motherboard based computer architecture with a serial Bus controller that is selectively wired to any number of peripheral components. Peripheral in this context is not limited to traditional peripheral devices such as external hard drives, CD-ROM's, zip drives, etc. but rather includes CPU, memory and other system level components.

Serial Bus architecture which sends only one bit at a time has traditionally been used for long distance data transmission and has been characterized by lower costs and lower performance then parallel. However, due to recent advances in serial data transmission, which has now reached 800 mbits/sec and is expected to double every year (Fibre Channel, for example, is capable of 133, 266 and 531 Mbps and 1.02, 2.12 and 4.25 Gbps), it is reaching parity with equivalent parallel Bus throughput speeds and will ultimately surpass it. As a result of this innovation, it has become possible to design a computer which utilizes a serial Bus controller in place of the parallel Bus, thus allowing every component to be connected in a modular peripheral fashion to the serial Bus controller using flexible wires in compliance with protocols or standards such as IEEE 1394, herein after FireWire. One of ordinary skill in the art will understand that as better conducing materials and new serial technologies emerge such as fiber optic, or other light based signal transfer protocols, it may be advantageous to replace the FireWire in the interest of speed, cost, efficiency, etc., without departing in spirit or scope from the disclosure of the present invention. The serial Bus uses a single cable or wireless link for data, transferring one bit at a time, avoiding signal skew. Additionally, fixed word size is not an issue as the first bits of every word can declare the word size as some devices may communicate using larger words than others. A central Bus controller 15 could be housed in a small box or similar structure with a bank of Fire Wire (or other fast serial connections such as Fibre Channel) connectors connected to it, each allowing high bandwidth transmission. In another similar embodiment, a bank of serial connectors could be present for high bandwidth transmission such as to memory, CPU and hard drive while one or more wireless receivers such as Bluetooth or similar wireless receiver are present for low bandwidth devices like keyboards and pointing devices. It would be desirable to have more wiretaps than are immediately necessary to allow the addition of additional CPU's enclosures 16, memory units, 14 or other components and/or devices 20. This architecture has particular benefits for wearable computers and transferable core computing, but will also extend to conventional laptops, personal digital assistants (PDA's), and desktop computers. For example, each component could be housed in a separate enclosure which will be connected to the serial Bus controller 15 by a thin flexible cable. As such, each enclosure can be designed to meet the specific demands of the component contained therein. Therefore, while the CPU enclosure 16 would need to be insulated, it should also be very good at dissipating heat. The hard disk enclosure 19 would need to be shock resistant, the memory component 14 shielded from EMI, etc., but a requirement for one component enclosure need not be applied to the others. The added benefit of this is that heat degradation will no longer be an issue for components such as memory because the CPU need not be in the same case as the memory and positioned near it as it often is on a motherboard. Additionally, a user could have several serial computer systems, for instance, one at work and one at home but have only a single CPU enclosure 16 and/or memory module 14 which he carries back and forth that can be utilized by any system. For these reasons and those disclosed below, the invention represents a significant advance over the parallel Bus computer architecture.

Accordingly, the design constraints imposed on the design of computer systems by traditional Bus-based systems will be replaced, and new novel system designs will emerge. The traditional restrictions on the distance between the sub-components of computer systems will no longer exist and the traditional Bus will be replaced by wireless or fast serial connection means such as FireWire depending on the bandwidth requirements of each connection. This means that sub-components of computer systems can each be designed in their own enclosure yet be electrically connected via a single fast wired or wireless link to other sub-components in a standard or proprietary way. As a result, one can design many different computer systems flexibly using all or some of the available subsystems (some of which can even be based on the existing parallel architecture such as a single module containing memory and the CPU) and/or standard or non-standard "open" or proprietary components. Each subsystem or component may or may not be enclosed in its own enclosure which results in each component standing alone or being grouped together with one or more other components into the same enclosure, to take advantage of material science aspects or functional design preferences. This idea requires the OS to support hot-swapping and configure on-the-fly to determine what type of peripheral devices are attached as well as to determine the characteristics of these attached devices, not just peripherals in the traditional spirit of the word but computer sub-components such as memory, fixed disks, etc. The basic I/O system (herein after BIOS) code for each component which traditionally resided in a central BIOS chip location can reside on the component itself and is sent via high speed serial connection to the serial bus controller 15 (herein after SBC) which contains a central BIOS chip or central BIOS management function and/or the OS on system boot, or dynamically, when added to the powered system. It is important to minimize the proprietary nature of this architecture as much as possible with respect to end-level peripheral devices 20 such as monitors, speakers, external devices, etc. as these devices are ubiquitous in the marketplace and substantial investments have been made in these items by owners of computer equipment. The serial Bus architecture will preserve to the maximum extent investments in these items. For example, a video graphics card module, under the serial Bus architecture, will contain graphics card hardware as well as firmware or a BIOS which will communicate directly with the serial Bus controller 15, sending at system boot, information sufficient to characterize itself and the manner of communicating with it. However, on the output side, the module will possess a standard or proprietary video connector so that a monitor or other third-party display device can be connected directly. As another example, a sound card module will contain all required sound card hardware as well as a firmware chip or BIOS which will, at system boot, identify itself to the serial Bus controller 15 via the serial cable. On the other end, this module will contain all connectors typically associated with sound cards such as microphone in, speaker out, and game port. Thus, persons already possessing items such as monitors and speakers can still make use of them. Additionally, those who don't already possess them but desire to do so will be able to enjoy the same economies of scale due to volume of manufacture as those who purchase standard PC peripherals, as opposed to having to look for thinly available and more expensive proprietary peripheral devices. The present invention can be used in "user-supported" computers as described in U.S. Patents 5,305,244 and 5,844,824; the disclosures of these two patents, assigned to the same entity, are hereby incorporated by reference into the present disclosure.

New advances in serial communications are pushing the speed of the new standard serial interfaces such as IEEE 1394 close to and soon beyond the traditional Parallel PCI Bus speed. Accordingly, we can envision a time when the design constraints imposed on the design of computer systems by the limitations by the traditional Bus-based systems will soon be removed and a new and brave system design will emerge. The traditional restrictions on the distance between the subcomponents of computer systems will no longer exist and the traditional Bus will be replaced by a wireless or fast serial connection means such as IEEE 1394 (FireWire) depending on the bandwidth requirements of each connection. This means that subcomponents of computer systems such as CPUs, chip sets, RAM, HDD's, pointing devices, keyboards, I/O subsystems, BIOS, etc. can each be designed in their own enclosure yet be electrically connected via a single fast wired or wireless link to other sub-components in a standard or proprietary way.

As a result, using the teachings of the present invention, one can design many different computer systems flexibly using all or some of the available subsystems or components. Each subsystem or component may or may not be enclosed in its own enclosure or grouped together with one or more components into the same enclosure. Note that this connection method effectively enables the decoupling of the signals required by individual components from each other. This means that different speeds and timings could be designed for each component to enable it to run to the limit of its capability and technology thereby enhancing the overall system performance.

The following components are examples of some of the components that can be designed as standalone logical and/or physical components that can be connected to other components via fast serial wired or wireless. These examples could be part of a wearable, portable, and/or desktop computing environment, as all utilize many of the same components.
Video subsystem can be comprised of one or more from the set of:
BIOS
Video Controller
Video RAM
Display Connector
Camera Connector
Power
Audio subsystem can be comprised of one or more from the set of:
BIOS
Sound Chip
Echo canceller
Noise canceller
Microphone input
Speaker output
Microphone
Speaker
Power
Short term memory subsystem can be comprised of one or more from the set of:
BIOS
RAM
DMM
Power
Long term storage subsystem can be comprised of one or more from the set of:
HDD
RWDVD
CD
Flash
Power
I/O subsystem can be comprised of one or more from the set of:
PC-Cards
PCI Cards
Smart Cards
Power

Note the added flexibility of being able to simply change the CPU 16, HDD 19 or even the video subsystem or any other subsystem at will, by changing one subcomponent while the rest remain unchanged. It provides countless configurations limited only by imagination of design. This design will give rise to a new type of operating system (OS) that will take advantage of the new architecture. These new OS's will repackage the functionality of current OS's and add functionality to enable dynamic configuration or configuration on-the-fly capability. Such an OS is defined under concurrently filed application entitled "Operating System for a dynamically re-configurable PC.

Most of the desirable design attributes and properties associated with Object Oriented "OO" software design are embodied by the new computer architecture of this invention. For example, the encapsulation property of OO Software design can be applied to this architecture by designing the BIOS code associated with a particular component of the computer into the component/enclosure versus leaving it in its existing centralized BIOS location. On power up, the BIOS sends all necessary information to the dynamic OS so that it can communicate with the component and optimally configure or re-configure itself. A similar design approach could be taken with power supplies where power provisions can be designed into some of the individual components versus the existing single central power supply design. This will enable the de-coupling of the development and innovation of each component from the limitation of system designs and specific applications and environments can be addressed more effectively. As an example, one can develop a new and improved type of display or storage device that requires a different type of BIOS support and/or power configuration without regard to existing system design limitations. Such a device or component can still be expected to be easily used by new systems or used as an upgrade with existing systems simply by designing the new BIOS code, power supply and any function or requirement unique to the component itself. Additionally, there is no requirement for any two components to have the same number of input lines or bits and/or output lines or bits in order for them to communicate as is required in a parallel-based system. For instance, a 32 bit processor can communicate with either a 16 bit memory or a 32 bit memory serially. Also, a processor upgrade does not automatically obsolete other components such as the video and audio subsystems where heavy investment could already have been made. This is true even if a 32 bit processor was upgraded to a 64 bit processor or 64 to 128. This will also create opportunities for innovations in operating systems, processor instruction development, machine insensitive languages, and interpreted languages (such as JAVA) to isolate the applications from all of the processor and configuration detail.

The computer disclosed herein will at its essence be a real time operating system event driven machine. That it is to say, as peripherals are attached and removed and system level components are added, the machine will be able to adjust accordingly. A certain line in the serial cable can be used as a ground to enable the SBC 15 to "know" whether or not that serial connection is enabled, thus notifying it of the presence or absence of a connected device. In this manner, if a floppy disk drive or zip or other peripheral device is disconnected while the computer is in the powered state, the SBC 15 and OS will still be able to effectively be aware of and manage its available resources. Without this real time or nearly instantaneous updating, the potential for errors or exceptions would be significantly increased when devices which were connected at boot are later removed when the computer is in the powered state.

Essentially, three innovations will accelerate the development of the present invention. The first is the serial Bus controller 15 which will serve as the arbitrator between the system level components and peripherals. The second is a custom chipset for a CPU 16 that is able to communicate with the serial Bus controller 15. The final is a dynamic computer operating system able to configure itself on the fly to determine what devices and system level components are attached and adjust accordingly. As to the first and second innovations, the general micro-architecture of the serial Bus computer will preferably have the control unit and data path or data section (registers and ALU) in a single enclosure. The processor enclosure 16 will be similar in architecture to existing processor enclosures. Contained therein will be the CPU 10 the equivalent of Level 1 Instruction 11 and Data Cache 12 and Integral Level 2 Cache 13. Also, initially at the I/O 18 will be a parallel to serial converter 17 which interfaces with the combination serial/power cable. Eventually a new generation of CPUs that output serial data will emerge eliminating the need for the parallel to serial converter 17 in all or some applications. The new generation CPUs may have simple or no supporting chipsets.

The flexible serial cable itself will carry data and can supply power as well. There may be an additional line or lines for BIOS information to pass to the SBC 15 or, alternatively, it may be sent over the same serial line. Rather than having each system component connected to the system Bus as in the parallel Bus architecture, each will be connected to the serial Bus controller 15 unit via a single serial cable.

In the Bus-less or serial Bus PC, power can be local to each device, central or a combination thereof. Depending upon the designated use, i.e. wearable, portable, desktop, different configurations may be more desirable. The flexible serial cable interconnecting the components could optionally distribute power from a central power supply. The cable would have several lines encased within carrying data and power and all connectors would accommodate this dual functionality. The power supply could be integral to the serial Bus controller in a desktop environment or it could be a separate battery in a wearable or portable configuration or drawn from an enclosure or piece of equipment if embedded. Alternatively, power could be integral to some or all of the attached components. It may be desirable to have certain necessary system level components such as memory, CPU, hard drive and I/O to receive their power centrally while peripheral devices could have their own power supply or also draw power from the central source.

The preferred and optimumly preferred embodiments of the present invention have been described herein and shown in the accompanying drawings to illustrate the underlying principles of the invention but it is to be understood that numerous modifications and ramifications may be made without departing from the spirit and scope of this invention.

## Claims

**1.** A computer system comprising a CPU and at least some additional components of a conventional computer, each of said components in electrical contact with a serial Bus controller which possesses means to serve as an arbitrator between said components and also any peripheral devices and said CPU having means to communicate with said serial Bus controller, said system absent any parallel computer BUS.

**2.** The computer system of claim 1 wherein said system comprises means to configure itself at boot or on-the-fly to determine what of said components are attached in said system and means to adjust accordingly.

**3.** The computer system of claim 1 wherein all of said components and said serial Bus controller are all in a single housing.

**4.** The computer system of claim 1 wherein all of the said components and said serial Bus controller are in separate housings.

**5.** The computer system of claim 1 wherein an I/O component is parallel to said serial Bus controller.

**6.** The computer system of claim 1 wherein there is an additional line for BIOS information to pass to said serial Bus controller.

**7.** The computer system of claim 1 wherein each of said components is connected to said serial Bus controller via a single serial cable, said components and said serial Bus controller are all preferably located within a single housing.

**8.** The computer system of claim 1 wherein an additional line is provided for BIOS information to pass to said serial Bus controller.

**9.** The computer system of claim 1 having means wherein BIOS information and data are sent over a serial line other than a line to said serial Bus controller.

**10.** The computer system of claim 1 wherein power is supplied to said system via a single central power supply means.

**11.** The computer system of claim 1 wherein power is supplied to said system via power means located in each of said components or a subset thereof.

**12.** The computer system of claim 1 wherein a customized supporting chipset is provided for said CPU.

**13.** The computer system of claim 1 wherein at any I/O component will be a parallel to serial converter to interface with a combination serial-power cable.

**14.** The computer system of claim 1 wherein a power line is provided to said system, said power line also supplying data and information to said system.

**15.** The system of claim 1 wherein each of said components is connected to said serial Bus controller via a serial data connection.

**16.** The system of claim 1 used in a user-supported computer.

**17.** A computer system comprising at least one component(s) of a conventional computer in addition to a customized CPU, an I/O subcomponent, and a serial Bus controller, each of said components in communication with said serial Bus controller, said serial Bus controller used in said system as a substitute for a conventional computer parallel computer Bus, said CPU having means to communicate with said serial Bus controller, said serial Bus controller having means to communicate with any additional components and peripherals.

**18.** The computer system of claim 17 wherein said system comprises means to configure itself at boot or on-the-fly to determine what of said components are attached in said system and means to adjust accordingly.

**19.** The computer system of claim 17 wherein all of said components and said serial Bus controller are all in a single housing.

**20.** The computer system of claim 17 wherein all of said components and said serial Bus controller are housed in separated housings.

**21.** The computer system of claim 17 wherein an I/O component is in parallel to said serial Bus controller.

**22.** The computer system of claim 17 wherein there is an additional line for BIOS information to pass to said serial Bus controller.

**23.** The computer system of claim 17 wherein each of said components is connected to said serial Bus controller via a single serial cable, said components and said serial Bus controller are all located within a single housing or in separate housings.

**24.** The computer system of claim 17 wherein an additional line is provided for BIOS information to pass to said serial Bus controller.

**25.** The computer system of claim 17 having means wherein BIOS information and data are sent over a serial line other than a line to said serial Bus controller.

**26.** The computer system of claim 17 wherein power is supplied to said system via a single central power supply means.

**27.** The computer system of claim 17 wherein power is supplied to said system via power means located in each of said components or in a subset of the same.

**28.** The computer system of claim 17 wherein a customized supporting chipset is provided for said CPU.

**29.** The computer system of claim 17 wherein at any I/O component will be a parallel to serial converter to interface with a combination serial-power cable.

**30.** The computer system of claim 17 wherein a power line is provided to said system, said power line also supplying data and information to said system.

**31.** The system of claim 17 wherein each of said components is connected to said serial Bus controller via a serial data connection.

**30.** The system of claim 17 used in a user-supported computer.

**31.** The system of claim 17 used in a transferable core computer.

**32.** The system of claim 17 used in an embedded computer.

**33.** A event driven real time operating system computer system comprising a CPU and at least some additional components of a conventional computer, each of said components in electrical contact with a serial Bus controller which serves as an arbitrator between said components and also any peripherals and said CPU having means to communicate with said serial Bus controller, said system absent any parallel computer Bus.

**34.** The computer system of claim 33 wherein said computer system and operating system are capable of detecting in real time or nearly instantaneously the removal of peripheral components and to effectively manage its resources in response to this.

**35.** The computer system of claim 33 wherein means exists for detecting the removal and addition of attached peripherals.

**36.** The computer system of claim 33 wherein means exists for adjusting the operating system to effectively manage its attached resources in response to the removal and addition of attached peripherals when in the powered state.
